# EUROPEAN PATENT SPECIFICATION

(11) **EP 0 692 995 B1**
(45) Date of publication and mention of the grant of the patent: **02.07.1997**
(21) Application number: 94911861.6
(22) Date of filing: 05.04.1994
(51) Int. Cl.: B01D 46/10, B01D 46/24, F01N 3/02

(54) **A METHOD FOR CLOSING A PASSAGE IN A FILTER BODY SAMPLE**
METHODE ZUM SCHLIESSEN EINES DURCHGANGS IN EINER FILTERKÖRPERPROBE
PROCEDE DE FERMETURE D'UN PASSAGE DANS UN ECHANTILLON DE CORPS DE FILTRAGE

(30) Priority: 05.04.1993 DK 402/93
(43) Date of publication of application: 24.01.1996
(73) Proprietor: Stobbe, Per, DK-2800 Lyngby (DK)
(72) Inventor: Stobbe, Per, DK-2800 Lyngby (DK)
(74) Representative: Plougmann, Vingtoft & Partners A/S
(86) International application number: DK9400140
(87) International publication number: WO9422556

(56) References cited:
- EP-A- 0 089 756
- EP-A- 0 206 250
- EP-A- 0 446 046
- WO-A-89/09648
- US-A- 4 662 911

## Description

This invention relates to improvements in connection with particle-based filter bodies for removing fine solid particles from fluids, in particular for removing fine solid particles from gases, such as for removing soot particles from exhaust gas from diesel engines.

In operation, such filters will be exposed to quite hostile environments; thus, the filters should be able to withstand high temperatures and the corrosiveness of the exhaust gases. Soot particles generated in the diesel engine combustion process are of a size down to about 0.1 µm; however, they have quite sticky surfaces and tend to agglomerate to larger particles of the order of 1-5 µm in the exhaust pipe outside the combustion chamber. This means that the filters should be able to remove particles in the size from about 0.1 µm to about 10 µm. The use of the filter bodies on vehicles will pose certain constraints on the design of the filter bodies, as they should be able to withstand shocks and vibrations due to movements of the vehicle, and as the dimensions of the filter should be as small as possible.

A type of filter body which has been found useful for the above purpose is made of a porous ceramic, metallic and/or metal-like material which is able to withstand the hot corrosive exhaust gases. The shape of the filter body is typically designed so that the gas has to travel through walls of the porous material, the walls having a porosity and a pore size so that the soot particles are not able to travel through the wall, whereby the gas is filtered. The porosity and the thickness of the filtering walls are chosen so as to provide a suitable filtering efficiency and an acceptable pressure drop over the filter body.

Filter bodies of this known type may be manufactured by extruding a plastic paste of a particle-based material such as a ceramic, a material based on particles of a metal-like materials, such as SiC, or a material based on particles of a metal, such as stainless steel, into the desired cross-sectional shape of the filter body. This shape preferably comprises a honeycomb-like configuration, so that the extruded body contains a number of parallel passages extending along and all through the length of the body from an inlet side of the filter body to an outlet side, the passages being separated by common passage walls. After the extrusion, the known method of production comprises blocking all passages by means of plugs of the same plastic material as the filter body ("plugging") in at least one end of each passage to prevent that during operation, the gas flows directly through the filter body without having been filtered by travelling through a porous wall of the filter body. Thus, in a filter body of this kind, the gas travels into the passages open at the inlet side, through the walls into the passages open at the outlet side and then out of the filter body.

After plugging of the passages, the filter bodies are sintered to form the final solid filter body. Filter bodies made in this way are disclosed in EP-A-0 089 756 and in EP-A-0 336 883.

The filtering efficiency of a filter body of this known type is defined by the dimensions of the filter body and the characteristics of the sintered material, such as the pore size and the porosity thereof. Those dimensions of the filter body which contribute to defining the filtering efficiency of the filter body are the total area and the thickness of the filtering walls in the filter body. The thickness of the filtering walls of the filter body is defined by the dimensions of the extrusion die. The total area of the filtering walls likewise depends on the dimensions of the extrusion die and on the length of the filter body, but also on the manner in which the channels of the filter body have been closed. When plugs are inserted into the passages, part of the filtering wall will become blocked and, thus, no longer takes part in the filtration of the flue gas. Thus, plugging a typical filter body having the dimensions ⌀ 170 mm L 250 mm, the passages being quadratic and having side lengths of 2.5 mm and a wall thickness of 1 mm, with 1 cm long plugs will result in blocking of approximately 5% of the total filtering surface of the filter body and, thus, in an increase in the pressure drop over the filter body as part of the porous material therein is now blocked. This increase in pressure drop may be compensated for in two ways. One way is to increase the area of the filtering walls by increasing the width or the length of the filter body and, thus, resulting in a larger filter body, which is not technically or commercially desirable. The other way is to increase the porosity and/or pore size of the filtering material; this is not desired as it will decrease the filtering efficiency of the filter body.

Another problem associated with this known plugged type of filter body is that as the sintered filter body is exposed both to gas pressure and thermal cycling, the plugs may loosen from the rest of the filter body and subsequently fall out from the filter body, resulting in a drastic reduction of the filtering efficiency. Even though it is attempted to avoid this loosening by using quite long plugs, such as of the order of 1 cm as mentioned above, the loosening problem may not be completely solved thereby. The problem with the thermal cycling is especially severe in filter bodies having different thermal expansion coefficients in the direction of the extrusion and in the transverse direction, such as Cordierite (EP-A-0 089 756). This may result in stress in the interfaces between the plugs and the extruded material, which again may result in loosening and removal of the plugs. The problem also potentially exists in filter bodies made of SiC (see EP-A-0 336 883), however, as SiC has the same thermal expansion coefficients in all directions, the resulting stress is not as severe when using SiC as when Cordierite is used.

The actual plugging of an extruded body is typically performed semi-manually, and this step of the manufacturing process is, therefore, typically the most expensive (See e.g. US-A-4,662,911:"Especially, the step of closing the through holes alternately is very difficult"). Thus, it would be highly desirable to obtain a plugging method which may be easily automated and which avoids the problem associated with potential loosening of the plugs.

An alternative way of manufacturing the filter bodies is by shaping these in moulds having a shape being the inverse of that of the desired filter body. Methods of this type may be seen in US-A-4,662,911 and EP-A-0 206 250. However, as only filter bodies with one shape may be made from a mould of this type, this manner of shaping the filter bodies is not preferred compared to e.g. the extrusion process and the versatility thereof.

Thus, an object of the invention is to provide an improved method for closing passages in filter bodies of the above-defined type and to provide, in an economic way, filter bodies having improved properties.

In a first aspect, the invention relates to a method for closing a passage in a filter body sample made from a solidifiable plastic or plastifiable particle-based material and comprising a plurality of coextending throughgoing passages separated by common passage walls, the method comprising deforming passage walls adjacent to the passage end.

Thus, the main principle of this aspect of the invention is to avoid relying on the insertion of additional material into the filter body sample, but rather to close the passage by means of material already present in the form of parts of passage walls adjacent to the passage end. This, of course, does not mean that it is not possible to add material in connection with the method of the invention, but this is not presently preferred.

The term filter body sample, as used in the present specification and claims, indicates a state of the filter body which is not the final hard, solid state in which the filter body is used for its purpose, but rather a state in which at least the wall parts in question are plastically deformable. As appears from the following detailed description, the wall parts which are to be deformed may be wall parts of a relatively stiff filter body sample, the relevant wall parts being softened prior to the deformation. Typically, the later solidification of the filter body sample in which the passage (or normally all the passages) has/have been closed by deformation of wall parts will take place by sintering of the particle-based material.

In the present context, the term "solidifiable plastic or plastifiable particle-based material" designates a material the main component of which consists of particles. One example of such a material is a ceramic material, typically a plastic clay or clay-like material. Other examples are materials based on metal or metal-like particles and typically a binder system comprising a "green" binder which will bind the system in its plastic or plastifiable state and a ceramic or inorganic binder, e.g. very fine metal or metal-like material, which will bind the material in its final solidified, e.g. sintered, state. Examples of such materials are given in the following. The filter body sample material will be in a plastic or plastifiable state during the deformation of the wall parts, at least the wall parts being deformed being in a plastic, in other words, plastically deformable, state during the deformation.

The deformation of the walls is suitably performed by introducing the walls into a female forming tool forcing the outermost parts of the walls together. Thus, the deformation is performed at an end of the passage, by pressing the female tool on to the end of the filter body sample. As will be easily understood from the drawings and the appertaining text, the female tool is advantageously defined by parts of adjacently positioned male forming tools positioned on the base of a mould. These male forming tools may suitably be positioned so that each male forming tool is pressed into an individual passage coextending with the passage being closed.

It is preferred that the passage being closed and the individual passages into which the male forming tools are introduced have in common the walls which are deformed. Thus, when a female forming tool is defined between the male forming tools introduced in the individual passages, the common walls will be introduced in the female forming tool and thus deformed to close the passage to be closed.

Normally, the tool is designed so that several of the passages in the filter body sample can be closed in the same operation.

It is preferred that the cross-sectional arrangement of the passages is in a number of substantially parallel rows, and that the passages in each row are arranged substantially equidistantly. It is especially preferred that the cross-sectional arrangement of the passages is in a regular pattern, and that the individual passages have substantially identical polygonal cross-sections. Firstly, this is the preferred arrangement already in the known filter bodies, and secondly, such regular arrangement will, of course, facilitate closing of several passages in one operation using suitably designed tools with several systematically positioned mould parts, such as illustrated in the following. In one embodiment, the male forming tools may be positioned on a substantially plane base whereby the deformation of the passage walls is performed substantially simultaneously by all female forming tools defined on the mould. In this way, all male deforming tools are pressed into the end of the filter body at the same time and, thus, the walls to be deformed are all introduced into the female deforming tools at the same time.

In a second embodiment, the base on which the male forming tools are positioned is shaped substantially as part of a curved surface, preferably a circular drum or wheel which, when rolled over the filter body sample, sequentially introduces the male forming tools in the passages, whereby the walls are deformed sequentially. Thus, as the drum or wheel is rolled over the end of the filter body, the male deforming tools are sequentially introduced into the passages, whereby the deformation takes place sequentially.

The plurality of passages which are closed may be divided into first and second groups, the passages of the first group being closed at a first end of the filter body sample and the passages of the second group being closed at an opposite second end thereof. This means that the resulting filter body will have the above-mentioned preferred flow path configuration where the gas is able to flow into one of the groups of passages open at a gas inlet surface, the gas then to flow through the filtering walls inside the filter and into the passages of the other group open at an opposite gas outlet surface and out of the filter body. In this manner, the area of the filtering wall of the filter body is close to being half of the total area of all passage walls which are common to passages of different groups. If all channels were closed at the same end of the filter body, the total filtering surface would be the cross-sectional area of the gas inlet side surface of the filter body; the filtering walls inside the filter body would not take part in the filtering of the flue gas. This is the reason why the well-known checkerboard pattern is preferred also for the filters made according to the present invention and, indeed, can be utilized to its maximum potential because the dead area caused by the plugs in the known filters is substantially avoided.

In a second aspect, the invention relates to a method for producing a filter body for filtering flue gas, the method comprising
- producing, from a solidifiable plastic or plastifiable particle-based material, a filter body sample comprising a plurality of coextending throughgoing passages separated by common passage walls,
- closing one end of substantially each passage by deforming passage walls adjacent to the passage end, and
- subsequently solidifying the particle-based material.

For simplicity of the manufacturing of the filter body sample and for the common walls to be as efficient in the filtering as possible, it is preferred that the cross-sectional shape of the through-going passages are polygons and that the male forming tools have a cross-section being a polygon of the same order as the polygons of the cross-sectional shape of the through-going passages. When the passages have the cross-sectional shape of polygons, the sides thereof may be constituted by the common filtering walls, whereby these common filtering walls may have equal thickness in substantially all of the filter body; this enables substantially all parts of the filtering wall in the filter body to take equal part in the filtering of the flue gas. This minimizes the pressure drop over the filter body as well as it offers a filter body being able to filter large amounts of flue gas before being fully clogged by the soot deposited in the filter body.

The cross-sectional polygon may be of order 4, whereby it is preferred that at least the tip of the male forming tools are of the shape of a pyramid.

A most interesting type of particle-based material is a material based on particles of SiC, which material can be shaped by extrusion, subjected to the method according to the invention for closing passages, and then sintered.

The mean pore size of the final porous SiC filter body will normally be in the range of 1 to 150 µm, in particular 10-100 µm. The preferred sub-ranges within this range will depend on the particular separation to be performed, in particular on the size of the particles to be retained by the filter. Thus, for removal of soot particles from diesel exhaust gas, the pore size of the material will normally be in the range of 15-80 µm, such as 20-50 µm. The higher the mean pore size, the lower the pressure drop over the filter body will be. One of the advantages of filter bodies made from particle-based SiC materials is that they can be made with a relatively high thermal conductivity, such as at least 5 W/mK and typically in the range of 5-30 W/mK, such as 5-15 W/mK. A high thermal conductivity will result in a high thermal shock resistance and thus resistance towards thermal shocks which may occur when the soot collected in the filter body is burned off, which is the normal way to purify and regenerate the filter body.

The porosity of the particle-based material, whether a SiC material or not, significantly influences the strength of the material. Thus the porosity selected will depend on the required physical strength properties, the selected pore size of the filter body and the particles to be filtered, and will normally be in the range of 30-90%, typically in the range of 40-75%.

Particulate SiC will normally have a weight average mean particle size in the range of 10-250 µm, such as in the range of 20-150 µm, preferably in the range of 30-100 µm. The selected particle size and particle size distribution will normally be dictated by realistic available commercial grades and the pore sizes and other properties aimed at in the final material. Seven commercial grades of SiC are presently preferred starting products for producing the porous material. One grade is particulate SiC of mesh 120, substantially corresponding to a particle size range of 88-125 µm. Another grade is particulate SiC of mesh 150, substantially corresponding to a particle size range of 63-105 µm. A third preferred grade is particulate SiC of mesh 180, substantially corresponding to a particle size range of 53-88 µm. A fourth preferred grade is particulate SiC of mesh 220, substantially corresponding to a particle size range of 44-74 µm. A fifth preferred grade is particulate SiC of mesh 280, substantially corresponding to a particle size range of 35-38 µm. A sixth preferred grade is particulate SiC of mesh 320, substantially corresponding to a particle size range of 28-31 µm. A seventh preferred grade is particulate SiC of mesh 360, substantially corresponding to a particle size range of 21-28 µm.

In addition to a large amount of particulate SiC having a particle size in the ranges described above, the material to form the basis of the preferred SiC-based materials typically comprises a smaller amount (up to 15 %wt of the total weight) of a fine-grained (typically in the order of 0.3-2 µm) sintering additive such as SiC and/or SiO₂ and/or carbon black, a binder, such as cellulose ether, water, an alcohol such as ethanol and optionally poly vinyl alcohol, a lubricant and/or a plastifier.

The shaped body or sample of paste may then be dried in a controlled atmosphere to confer some handling strength thereto while still preserving the possibility of keeping or making the walls deformable. Often, it will be preferred to dry the sample to a relatively high handling strength and then to soften the wall ends by soaking with a suitable liquid such as water or a mixture, such as an emulsion, of water and oil, thereby obtaining a plasticity of the wall ends which is suitable for the deformation performed according to the invention. After the deformation to close the passages, the sample is again dried, and then, the dried sample is placed in a high temperature oven where the temperature is elevated to temperatures in the order of 300-500°C whereby the binder is burned away, giving the SiC sample a rigid, open structure. Due to the smaller radii of curvature the fine-grained sintering additive, these small particles will evaporate when further elevating the temperature to in the order of above 2200°C up to about 2600°C. When evaporating, this material will condense at the grain contacts of the larger SiC particles and hence enhance the physical strength and the thermal conductivity of the sintered material; also the electrical conductivity of the material will increase hereby.

Even though the presently preferred material is SiC, the present invention may be used in the manufacture of filter bodies made of a wide variety of other particle-based materials such as B₄C, BaTiO₃, Si₃N₄, BN, Al₂O₃, Mullite (3Al₂O₃·2SiO₂), Cordierite (2 MgO·2Al₂O₃·5SiO₂), Cordierite combined with β-spodumen (Li₂O·Al₂O₃·4SiO₂), β-SiC, Stabilised ZrO₂, ZrO₂ + TiO₂, TiC-TiN-Al₂O₃ combinations, TiC-Al₂O₃ combinations, NaₓWO₃ (0<x<1), Al₂O₃ silicates, MgO silicates, CaO, silicates, Titanium oxide or M₂B, MB, M₂B₅, M₂C, MC, M₂N, MN, M₃Si, M₃Si₂, M₅Si₃ or MSi₂, where M is Mo or W.

In the following, the invention will be described in greater detail with reference to the figures, wherein
Fig. 1 illustrates a cross-sectional view of an extruded filter body plugged according to the prior art,
Fig. 2 is a partial cut-away side-view of the prior art filter body seen in Fig. 1,
Fig. 3 is a cross-sectional view of a filter body manufactured by a first embodiment of the method according to the invention and of a mould for use in the embodiment,
Fig. 4 is a perspective partly cut-away view of an end of a filter body made according to the first embodiment of the method of the invention,
Fig. 5 illustrates a mould for use in the first embodiment of the method of the invention,
Fig. 6 is a cross-sectional view of a filter body manufactured by a second embodiment of the method according to the invention and of a mould for use in the embodiment,
Fig. 7 schematically illustrates how the passage walls are deformed in this second embodiment of the method of according to the invention,
Fig. 8 illustrates an alternative embodiment of a mould for use in the method of the invention,
Fig. 9 illustrates another alternative embodiment of a mould for use in the method of the invention,
Fig. 10 illustrates the second embodiment of Fig. 6 wherein a shape-preserving body has been inserted, and
Fig. 11 illustrates a comparison of flow characteristics between a filter body (B) plugged according to the prior art and a filter body (A) closed according to the method of the invention.

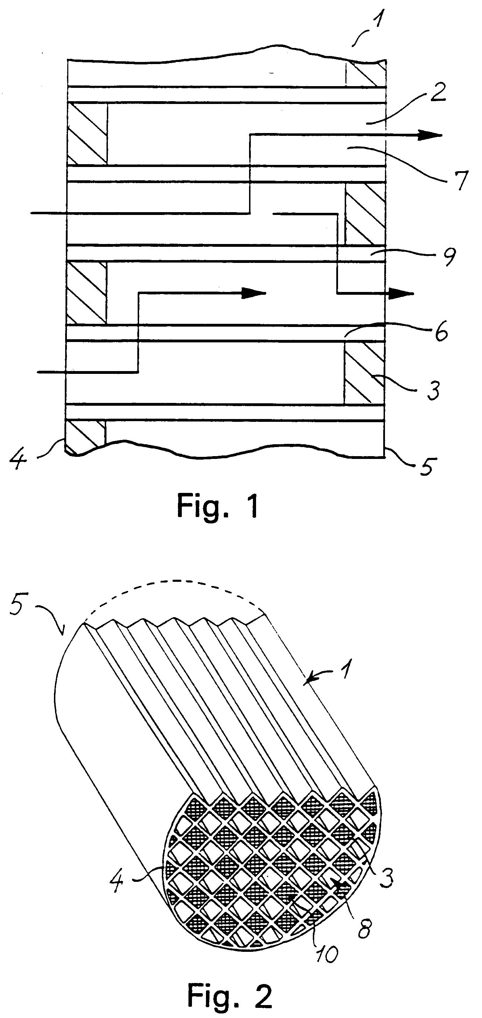

Fig. 1 is a schematic cross-sectional view of a filter body **1** comprising an extruded body **2** having a number of through-going passages **7** extending from a gas inlet side surface **4** to a gas outlet side surface **5**, with plugs **3** according to the prior art. Each end of the filter body **1** is plugged in a "checkerboard" pattern so that all blind passages open at the inlet side surface **4** of the filter body **1** have filtering walls **6** common only with passages open at the outlet side **5** surface of the filter body **1**. This structure is the so-called honeycomb filter structure.

As appears from this figure, the outermost parts **9** of the filtering walls **6** are blocked by the plugs **3**. In practice, about 5% of the total area of the filtering walls **6** will typically be blocked in this type of filter body **1**. The arrows show the flow of flue gas from the gas inlet side surface **4** through the filter body **1** to the gas outlet side surface **5**. It is seen that as the length of the plugs is larger than the thickness of the filtering walls **6** (typically in the order of a factor of 5), and as the material of the walls **6** and the plugs **3** is often the same, the gas will not flow through the plugs **3**, whereby the total filtering surface of the filter body **1** is reduced by the plugs **3**.

Fig. 2 illustrates the filter body **1** discussed in connection with Fig. 1. It is seen that the flue gas inlet side surface **4** and the gas outlet side surface **5** are opposite and that a first plurality **8** of blind filtration passages extends transversely into the filter body **1** from the inlet side surface **4** and that a second plurality **10** of blind filtration passages extends transversely into the filter body **1** from the outlet side surface **5**. It is further seen that the blind filtration passages of the first **8** and second **10** pluralities are arranged spaced apart and mutually juxtaposed in the filter body **1**.

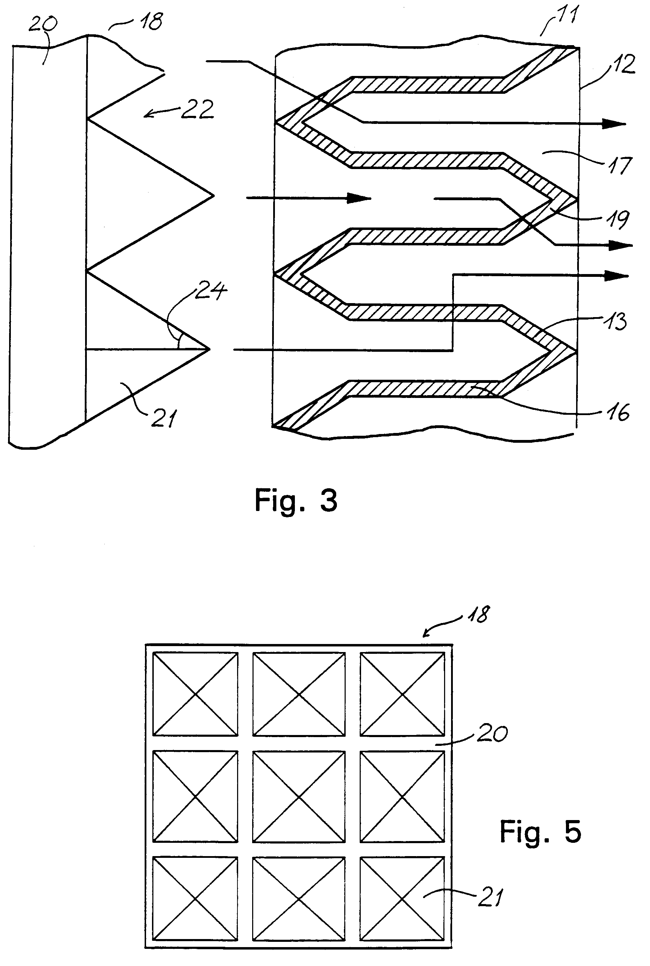

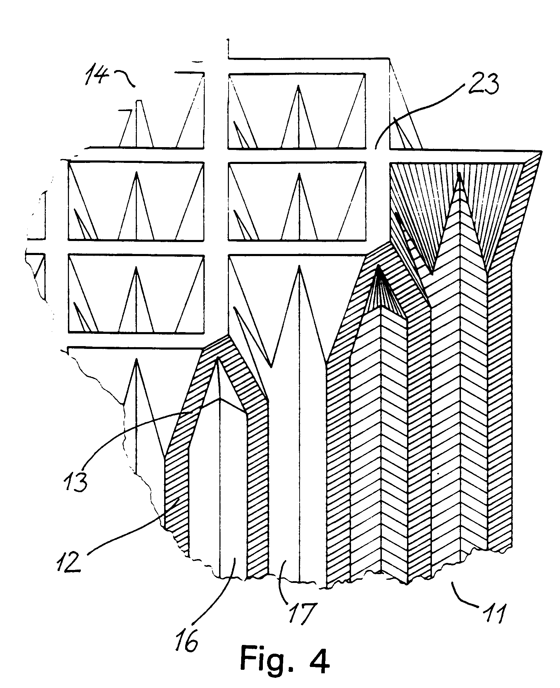

Figs. 3 and 4 illustrate a filter body **11** manufactured according to a first embodiment of the method according to the invention. It is seen that some of the original through-going passages **17** of the extruded body or filter body sample **12** are closed by deforming each end of the extruded body **12** by pressing a mould **18** into the end of the extruded body **12**. During this closing, outermost parts **19** of the filtering walls **16** in that end are deformed by female forming tools **22** of the mould **18**.

The female forming tools **22** of the mould **18** are defined by male forming tools or pyramid-shaped elements **21**, positioned on a base **20** of the mould **18**, the cross-sectional shape of which is chosen so as to ensure sufficient deformation of the outermost parts **19** of the filtering walls **16** so as to close at least some of the through-going passages **17** of the extruded body **12** when the mould **18** is pressed into an end thereof.

In this embodiment, a honeycomb-shaped filter body is manufactured, which means that the passages **17** have quadratic cross-sections and that all blind passages being closed at one end have common walls only with blind passages being closed at the other end. As the deformation performed on both ends of this filter body is identical, except for a displacement of the mould **18** so as not to close the passages already closed in the other end and thus to have passages that are not closed at all, the same mould **18** may be used in both ends of the honeycomb-shaped filter body **11**.

Fig. 3 illustrates a principle of the invention that the outermost parts **19** are deformed to close a passage by introducing walls adjacent to this passage to be closed into a female forming tool **22** which performs the closure. It is seen that the walls are introduced in the female forming tool **22** by introduction of the pyramid-shaped elements **21**, which define the female forming tool **22**, in at least some of the passages adjacent to the passage to be closed. By choosing pyramid-shaped elements **21** with suitable cross-sections and suitable positions on the base **20**, a suitable closure of the passage may be obtained.

It is clear that a passage into which a pyramid-shaped element **21** is introduced in one end, can not be closed at that end, that is, at least not in the same operation. In this embodiment, the pyramid-shaped elements **21** are positioned on the base **20** so as to be introduced in all passages covered by the base **20** and which are not to be closed at the end to be deformed. Thus, all four passages adjacent to a passage to be closed will receive pyramid-shaped elements **21** in order to produce a honeycomb-shaped filter body **11**.

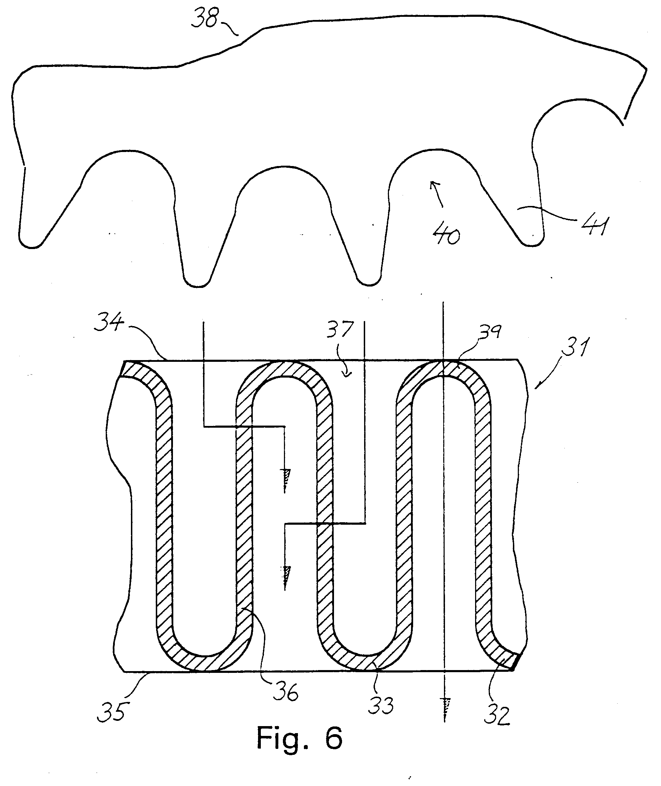

The mould **18** shown in Fig. 5 may be used for this purpose. The deformed end of a filter body **11** deformed by the mould **18** of Fig. 5 is shown in Fig. 4. It is seen that when the pyramid-shaped elements **21** are to be introduced in the passages not to be closed, the elements **21**, even though both the passages and the elements **21** have quadratic cross-sections, are rotated by an angle of in the order of 45° so as to enable the elements **21** of the mould **18** to be introduced in the correct passages. This is seen from Fig. 4. In this manner, the female forming tools **22** deforming the outermost parts **19** of the walls **16** are defined by four elements **21**; this may be realized from studying Fig. 4 where it is seen that the closed passages are positioned under the "crosses" **23** of the deformed outermost parts **13** of the filtering walls **16**.

It may be preferred to perform the deformation in several steps with a number of moulds **18** having pyramid-shaped elements **21** positioned in the same positions on the base **20** but having different angles **24**, starting with small angles, and thus small deformations not being sufficient to perform closure of the passages, and finishing with large angles, so as to obtain a closure of the passages.

As mentioned above, it may be preferred to soften the end of the extruded body **12** before deformation, especially if the extruded body **12** has been dried to increase the handling strength thereof. This softening may e.g. be obtained by soaking the end of the extruded body in a soaking liquid such as explained in greater detail below.

To ensure that the closures are gas-tight, the material of the deformed wall parts **13** is preferably mildly "kneaded" or pressed together by rolling a roller, preferably a steel cylinder, over the ends of the filter body **31** after deformation.

When using this method for producing the blind passages, the total area of the filtering walls **16** in the filter body **11** is not significantly reduced as also the deformed parts **13** of the filtering walls **16** take part in the filtering of the gas. This is illustrated by the arrows in Fig. 3, showing the flow of gas from a gas inlet side surface **14** through the filter body **11** to a gas outlet side surface **15**, also going through the deformed parts **13** of the filtering walls **16**.

It should be noted that the deformation of the filtering walls **16** does not significantly alter the filtering characteristics of the material of the deformed parts **13** compared to the characteristics of the walls **16**.

Furthermore, it is seen that the deformed parts **13** of the filtering walls **16** give the filter body **11** funnel-shaped gas entrances and gas exits which give a better flow of gas through the filter body **11** and, thus, further reduce the pressure drop over the filter body **11**.

If the filter body **11** is not to be honeycomb-shaped, such as if it was desired to have a majority of passages closed in one end of the filter body **11**, it might not be possible to use the same mould **18** in both ends of the extruded body **12**. In this case two different moulds - one for use in deforming each end of the extruded body **12** - may be used.

Fig. 6 illustrates a second embodiment of the method according to the invention. In this figure, as in Figs. 3 and 4, a filter body **31** comprises an extruded body **32** having a number of through-going passages **37**. Also in this embodiment a honeycomb-shaped filter body **31** is manufactured. Therefore, the extruded body **32** comprises a plurality of through-going passages **37** being separated by filtering walls **36**. These passages **37** are preferably positioned in a pattern wherein the passages are positioned in rows. Due to the honeycomb shape of the filter body **31**, every second of the passages in a row are closed at one end and the other half are closed at the other end.

In this embodiment, the deformation is performed by introduction of the outermost parts **39** of the walls **36** into female forming tools **40** defined by teeth **41** positioned on a wheel **38** in a manner so that when one tooth is pressed into a passage of the filter body **31** and when the wheel is rotated and translated, the next tooth will fit into another passage of the filter body **31**. Preferably, the wheel **38** is orientated and rotated so that the teeth **41** of the wheel **38** enter every second passage **37** in a row and thereby closes the passages positioned between two passages in which teeth **41** are introduced.

To ensure a sufficient closure of the passages, the depth of the teeth **41** (into the plane of the figure) is preferably substantially identical to the width of the passages **37** (also into the plane of the figure) of the filter body **31**.

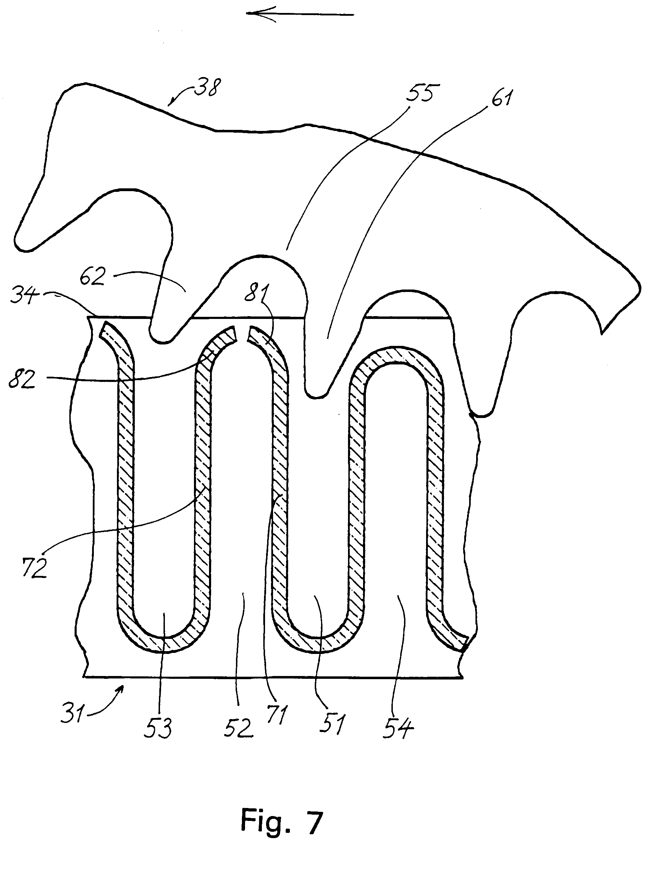

The function of the wheel **38** of this second embodiment will now be described in detail with reference to Fig. 7, wherein the wheel **38** has been displaced upwardly for better illustrating the function thereof.

The scenario is as follows: three passages are considered which, in the direction of the wheel **38** (see the arrow), are: a first **51**, a second **52** and a third passage **53**. A first wall **71** is positioned between the first **51** and the second passage **52** and a second wall **72** is positioned between the second **52** and the third passage **53**.

The first passage **51** is the first passage to receive a first tooth **61** and the third passage **53** is to receive a second tooth **62** of the wheel **38**, the second tooth **62** of the wheel **38** being the tooth adjacent to the first tooth **61** in the direction of movement and rotation of the wheel **38** (see the arrow).

The second passage **52** is to be closed by introducing outer-most parts **81** and **82** of the walls **71** and **72**, respectively, into a female forming tool **55** defined by the first **61** and second teeth **62** of the wheel **38** whereby the deformed outer-most parts **81** and **82** of the first and the second walls **71** and **72**, respectively, are to form the closure of the second passage **52** after the deformation.

Due to the first tooth **61** being introduced in the first passage **51** and due to the rotation and translation of the wheel **38**, the outermost part **81** of the first wall **71** is deformed by the female forming tool **55** of the wheel **38**. As the wheel **38** is further rotated and translated towards the third passage **53**, the second tooth **62** will be introduced into the third passage **53**, the first wall **71** will be deformed to obtain a shape defined by the female forming tool **55** as shown in Fig. 7. Due to the further rotation and translation of the wheel **38**, the second tooth **62** will be introduced in the third passage **53**. During this process, the outermost part **82** of the second wall **71** will be deformed due to its being introduced in the female forming tool **55** of the wheel **38** so as to be deformed substantially as illustrated in Fig. 7. Due to the further rotation and translation of the wheel **38**, the female forming tool **55** will, until the teeth **61** and **62** are equally introduced in the passages **51** and **53**, respectively, which is almost the situation in a passage **54** closed prior to the passage **52**, press the outermost deformed wall parts **81** and **82** together so as to ensure a suitable and tight closure of the second passage **52**.

After this, the first tooth **61** will begin to be retracted from the first passage **51**, and when the second tooth **62** has been withdrawn from the third passage **53**, the deformed wall parts **81** and **82** have met over the second passage **52** whereby this passage has been closed at this end of the filter body **31**.

As will be seen from Figs. 6 and 7, the closure of the closed channel **52** is positioned at a small distance from the surface **34** of the filter body **31**. This, however, has no effect on neither the strength of the filter body **31** nor on the filtering capability of the filter body **31**. This distance is typically in the order of 2 mm. The difference in the appearance of the filter bodies according to the first and the second embodiments is solely visual. The filtering capabilities and the strength of the filter bodies does not depend on this difference.

This example has been described using a single wheel or a mould having a base describing a curved surface. However, it will increase the productivity of the manufacturing process if a number of wheels were assembled on a common shaft so as to deform and close all the relevant passages at one end of an extruded body in one process. Furthermore, it will be possible to use two such setups in a manner so that the extruded body may be deformed in both ends at the same time. This, of course, will require that the two shafts are inter-related so as to avoid that some channels are closed at both ends and others not closed at all.

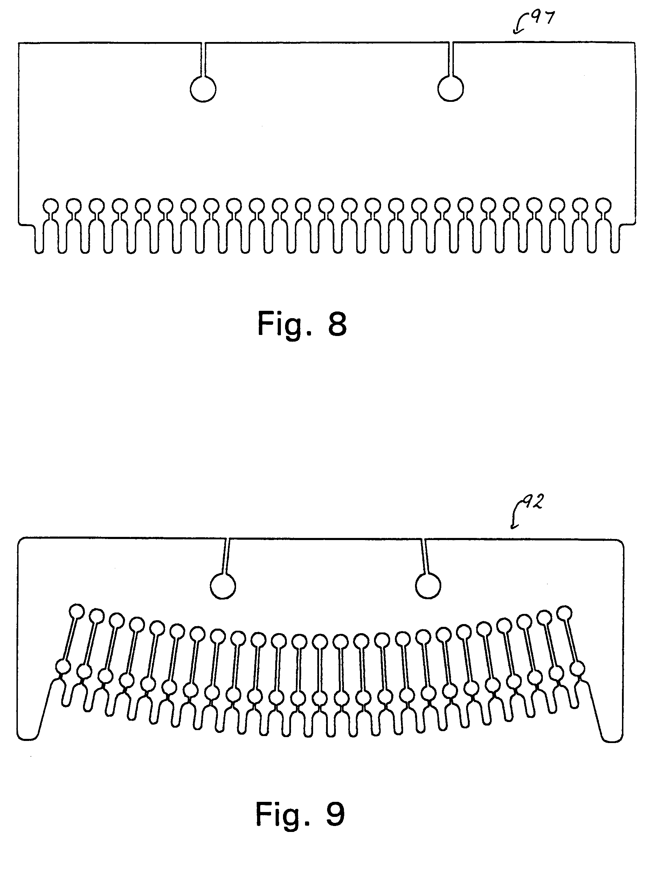

Figs. 8 and 9 illustrate alternative embodiments for use in the method of the invention. The mould **91** of Fig. 8 may replace the mould **20** of Figs. 3 and 5, and the mould **92** of Fig. 9 may replace the mould **38** of Figs. 6 and 7.

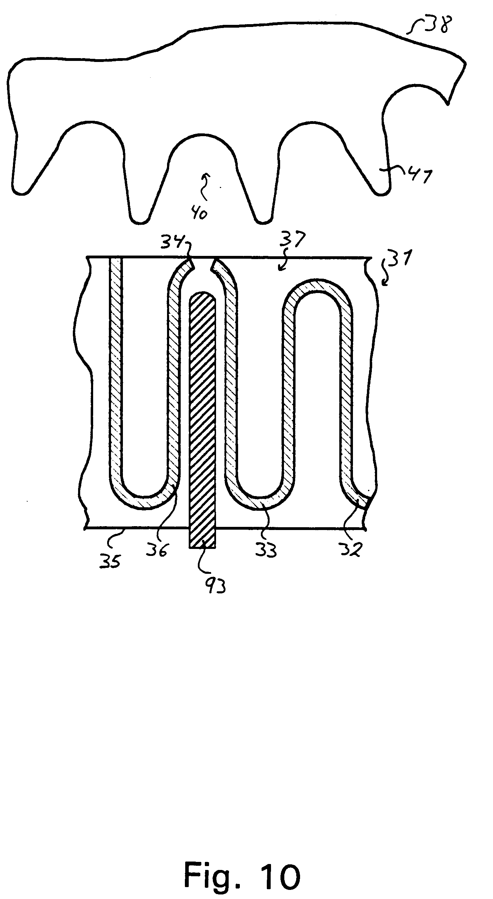

Fig. 10 is substantially identical to Fig. 6 except for the additional shape-preserving body **93**. This body is inserted in order to assure that the deformed walls obtain the correct shape during deformation. If the filtering walls have a tendency to crack or break up, the body **93** and the female forming tool **40** (which for illustration purposes have been removed from contacting the extruded body) will define the correct shape which the deformed filtering wall should obtain after deformation.

It may be preferred to insert a number of shape-preserving bodies **93** into the filter body sample during deformation. Thus, it may be preferred to insert bodies **93** in all passages to be closed.

### EXAMPLE 1: Wet deformation

In the following, the manufacture of a filter body made of SiC particles is described.

The formula for the plastic material may be varied for different purposes. Presently preferred typical materials for a filter body having a suitable filtration efficiency and an acceptable pressure drop over the filter body, and which also provides a good mechanical strength and good thermal properties for use on e.g. a diesel engine-driven fork lift truck are within the ranges given in the below Table 1:

**TABLE 1**

| | wt% | such as |
|---|---|---|
| Cellulose ether * | 3-10 | 5.2 wt% |
| Poly vinyl alcohol (10% solution) | 0-2 | 1.3 |
| Stearic acid ** | 0-2 | 1.3 |
| Ethylene glycol *** | 0-4 | 1.0 |
| Ethanol | 0-10 | 6.4 |
| Water | 5-15 | 8.1 |
| Coarse SiC (10-250 µm diameter ****) | 60-70 | 64.1 |
| Fine SiC (Submicron *****) | 5-15 | 12.8 |

| | | |
|---|---|---|
| * such as Tylose® MH 300p | | |
| ** could be replaced by other lubricants such as Microcrystalline wax (polyethylene wax or emulsion thereof) or paraffine wax | | |
| *** could be replaced by other plastifiers such as poly(ethylene) glycol, glycerine, dioctyl phthalate or poly(propylene) glycol | | |
| **** such as F180 from Arendahl Smelteverk a.s. | | |
| ***** such as FCP 10-S from Arendahl Smelteverk a.s. | | |

The ingredients are weighed in separate containers. Firstly, the dry ingredients (coarse and fine SiC, cellulose ether) are mixed. Then Poly vinyl alcohol, Stearic acid, Ethylene glycol and alcohol are added and finally the water is added. After additional mixing the material is ready for extrusion.

The extrusion process is preferably performed using a standard single auger extruder.

The mixed material is fed into the feeding auger of the extruder where the material is conditioned. From here it is pressed through a noodle-die, transforming the material into "noodles" which are chopped up by a rotating knife. The material now falls into the vacuum chamber of the extruder.

From the vacuum chamber the material is transported by the main auger, which compresses and homogenizes the material. The material is pressed through the extrusion head at a pressure in the range of 15-80 bar and is received on a electronically controlled table or on a table with an air cushion. The extrusion temperature is 15-55°C, such as in the order of 30°C. The bodies are cut in suitable lengths by a grinder, and are placed in a container to be used when drying the bodies.

After extrusion, the extruded bodies are dried, e.g. in a microwave oven (Husquarna QN1276F) added extra ventilation. After 15 minutes of drying at full effect (650W) and 15 minutes at half effect the bodies are dry.

The extruded body has a wall thickness of 0.5-1.0 mm, and the passages thereof are quadratic having a side length of in the order of 2.5 mm.

The dried bodies are rigid and hard enough for handling and machining. The dimensions of the bodies are measured, and the bodies are machined to obtain the desired length. The cutting of the bodies may be performed using a grinding plate or a diamond-coated cutting disk.

To be able to better deform the material in an end of the dried extruded body, this end is preferably soaked in a soaking liquid, such as water, water/ethanol, water/wax emulsion, water/detergent or water/oil emulsions. In the present example pure water was used. The end of the body may be soaked up to 5 mm from the end of the body. After this, the soaked end is inserted into a suitable tool which restructures the humid and deformable walls of the body. The walls are restructured to meet over a passage which is to be closed.

In this example, a tool of the type shown in Fig. 5 is used. The pyramid-shaped elements have a side length of in the order of 4 mm and a height of in the order of 4-7 mm. The distance between the individual pyramid-shaped elements was in the order of 4.8 mm.

The soaking of one end of a filter body sample may be performed by placing this end in a container containing 10 mm of the soaking liquid for 2-10 minutes, such as 5 minutes. After that, the wet end of the filter body sample is positioned on a sponge positioned in a container containing 5 mm of the soaking liquid for a period of time, such as 2 to 10 minutes, preferably in the order of 5 minutes, whereafter the soaked end of the body is placed on a more dry sponge for removing excess soaking liquid for a second period of time, such as 5 to 30 minutes, preferably in the order of 10 minutes. Finally, the filter body sample is positioned on a dry surface with the soaked end pointing up for a third period of time, such as 2 to 10 minutes, preferably in the order of 5 minutes. During this period of time, the soaked end may be soaked every e.g. 5 minutes until the filter body sample has a suitable working consistency.

After the first soaking step, the filter body sample may alternatively be prepared by heating in a micro wave oven at full effect (650W micro wave power) for 3-4 minutes.

The deformation preferably takes place in a number of steps. In the first step, the walls are deformed by a deforming tool having relatively a sharp angle (see Fig. 3) of 15-30°, such as in the order of 22.5°. After this, further deformation is performed using tools having less sharp angles, such as 25-60°, preferably in the order of 30°.

Inbetween the shaping steps, the end of the filter body sample is "rolled", e.g. by using the end of a polished steel cylinder. Thus, the material of the deformed walls is kneaded together to ensure that the passages are closed and that the closures have sufficient strength.

Furthermore, to prevent adhesion of the tools to the soaked end of the body, SiC powder may be sprinkled on the soaked end. This SiC powder is preferably either fine SiC particles, such as having a particle size of 35 µm, or a mixture of 0.3-2 µm SiC and 85 µm SiC.

After the restructuring, the restructured end of the body is dried whereafter a similar restructuring may be performed at the other end of the body. Care should be taken to ensure a suitable displacement so that no passages remain open in both ends.

As mentioned above, blocking the passages of the filter body sample using the above described method will not substantially reduce the total area of the filtering wall in the filter body. The deformed or restructured part of the filtering wall in the filter body forms a closure over the passages to be closed. This closure is made of the same material as the rest of the filtering wall of the filter body, whereby the closure will also take part in the filtration of the exhaust gas.

In the same time, both due to the not-reduced area of the filtering wall and due to it being possible to form funnel-shaped entrance and exit holes for the gas, the pressure drop over the filter body according to the invention is smaller than that of a filter body incorporating typical plugs.

After restructuring of the ends of the filter body sample the sample is dried as described above in an oven, whereafter the temperature is elevated to a temperature in the order of 200-600°C to evaporate the binder (pyrolysis).

After pyrolysis of the binder the bodies are sintered in e.g. an electrical heated furnace in an argon atmosphere for 15 to 240 minutes at temperatures above 2200°C, such as 2300°C.

### EXAMPLE 2: Dry deformation

In contrast to Example 1, the deformation of the ends of the filter body may also be performed without softening the filter body by soaking in a soaking liquid.

An extruded body was manufactured as seen in Example 1 on the basis of the following slightly altered formula:

**TABLE 2**

| | wt% | such as |
|---|---|---|
| Cellulose ether * | 3-10 | 5.9 wt% |
| Poly vinyl alcohol (10% solution) | 0-2 | 0.8 |
| Wax emulsion (such as Licomer PE 02) | 0-10 | 0.8 |
| Stearic acid ** | 0-3 | 0.8 |
| Poly ethylene glycol *** | 0.8-2.54 | 1.3 |
| Ethanol | 0-10 | 3.4 |
| Water | 5-15 | 11.0 |
| Coarse SiC (10-250 µm diameter ****) | 60-70 | 63.2 |
| Fine SiC (Submicron *****) | 5-15 | 12.2 |

| | | |
|---|---|---|
| * such as Tylose® MH 300p | | |
| ** could be replaced by other lubricants such as Microcrystalline wax (polyethylene wax or emulsion thereof) or paraffine wax | | |
| *** could be replaced by other plastifiers such as (ethylene) glycol, glycerine, dioctyl phthalate or poly(propylene) glycol | | |
| **** such as F180 from Arendahl Smelteverk a.s. | | |
| ***** such as FCP 10-S from Arendahl Smelteverk a.s. | | |

This body was extruded as described in Example 1 under a slightly higher extrusion pressure (in the order of 10 bars higher).

The extruded body was dried in a drying cabinet having a starting relative humidity of 95% and a temperature of 80°C. The relative humidity and the temperature were lowered to 55% and 20°C, respectively, (ambient atmosphere) during four days, whereafter the extruded bodies were dry.

After drying, as described in Example 1, the dried bodies were machined to obtain the desired dimensions.

Deforming the ends of a filter body which have not been softened naturally requires a larger force compared to a softened filter body. Thus, it may be preferred that dry-deformation of filter bodies is performed by a machine. This machine may comprise a holding means comprising a metal support and a pneumatic rubber bellows which, when inflated, will hold the filter body. The deforming mould may be held by a mould moving means moving the mould toward the filter body in a linear movement. The mould in this embodiment, thus, should be a mould having a straight base, such as the mould seen in Figs. 3 and 5.

The force required to close a single channel may be in the order of 50-500 grams. Thus, the force required to deform all relevant channels at the end of a filter body containing e.g. 800 channels may be in the order of 40-400 kg.

As large forces are required in order to perform the dry-deformation, it may be preferred to introduce shape-preserving means into the channels in order to prevent collapse of the filter body walls during deformation. These shape-preserving means may be suitably shaped rods introduced from the side opposite to that of the mould.

The instrument performing this dry-deformation may furthermore comprise a number of sensors to ensure the desired precision of the deformation process:
- a transducer for measuring the deformation force,
- a transducer for ensuring the correct motion distance of the mould into the filter body,
- a device for measuring the height of the filter body in question, and/or
- a device for determining the outer diameter of the filter body in question.

The information from the different sensors may be fed into e.g. a PLC which then controls the deformation of the filter bodies.

As filter bodies may be manufactured with a precision of the order of 0.5-0.1 mm, it may be preferred that the precision of the deformation is in the same order of magnitude. Naturally, this will require a strict control with the deforming instrument. This precision may be obtained by either employing a number of suitably chosen and suitably positioned sensors. An improved precision may also be obtained by allowing the deforming mould to be displaceable in order to adapt to e.g. small rotations of the filter body.

### EXAMPLE 3: Comparison Example

A comparison has been made between two filter bodies A and B. Both filter bodies have been manufactured as described in Example 1 with the exception that B, instead of the method of the invention, has been plugged in accordance with the prior art. In B plugs of a length of 5-7 mm were introduced in each end in a checkerboard-like manner. The material of the plugs was identical to the material of the extruded body.

The two filter bodies were surrounded by an insulating material and canned in a steel can.

A test was performed in which gas at 20°C was blown through the filter bodies while the volumetric flow (m³/s) of gas and the counter pressure over the filter bodies was measured.

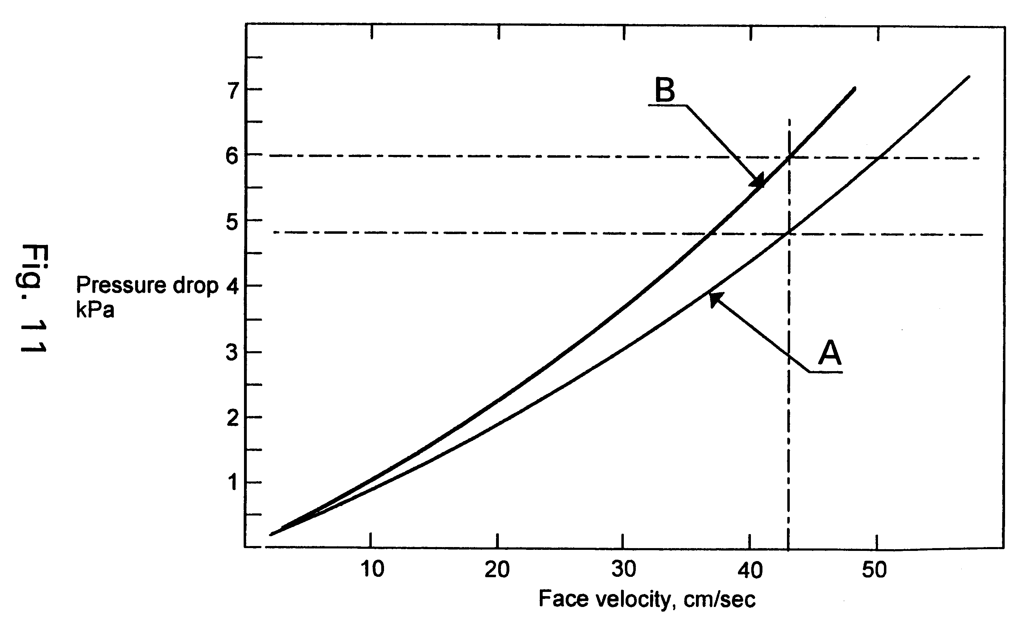

The results of these tests is shown in Fig. 11, wherefrom it is clear that filter body A has the superior flow characteristics; a generally lower counter pressure.

It should be noted that the graphs of Fig. 11 have been corrected to take into account the loss of filter wall of filter body B. Thus, in the graphs of Fig. 11, the effective filter wall area is used. Thus, the lower counter pressure seen in this test is solely based on the funnel-shaped channel entrances and exits. If the lower filter wall area of filter body B was further taken into account, an additional 2-10% higher counter pressure will be seen in B.

Thus, it is clear that the closing method of the invention renders filter bodies superior over the prior art.

## Claims

1. A method for closing a passage in a filter body sample made from a solidifiable particle-based plastic or plastifiable material and comprising a plurality of coextending throughgoing passages separated by common passage walls, characterized in that the method comprises mechanically deforming passage walls adjacent to the passage end.

2. A method according to claim 1, wherein the deformation of the walls is performed by introducing the walls into a female forming tool forcing the outermost parts of the walls together.

3. A method according to claim 2, wherein the female forming tool is defined by adjacently positioned male forming tools positioned on a base of a mould.

4. A method according to claim 3, wherein the male forming tools are positioned so that each male forming tool is pressed into an individual passage coextending with the passage being closed.

5. A method according to claim 4, wherein the individual passages into which the male forming tools are pressed are passages adjacent to the passage being closed.

6. A method according to claim 5, wherein the passage being closed and the individual passages into which the male forming tools are introduced have in common the walls which are deformed.

7. A method according to any of the preceding claims, wherein several of the passages in the filter body sample are closed.

8. A method according to any of the preceding claims, wherein the cross-sectional arrangement of the passages is in a number of substantially parallel rows, the passages in each row being arranged substantially equidistantly.

9. A method according to claim 8, wherein the cross-sectional arrangement of the passages is in a regular pattern, the individual passages having substantially identical polygonal cross-sections.

10. A method according to any of the preceding claims, wherein the male forming tools are positioned on a substantially plane base whereby the deformation of the passage walls is performed substantially simultaneously by all female forming tools on the mould.

11. A method according to any of claims 1 to 9, wherein the base on which the male forming tools are positioned is shaped substantially as part of a drum which, when rolled over the filter body sample, sequentially introduces the male forming tools in the passages, whereby the walls are deformed sequentially.

12. A method according to any of the preceding claims, wherein the plurality of passages are divided into first and second groups, the passages of the first group being closed at a first end of the filter body sample and the passages of the second group being closed at an opposite second end thereof.

13. A method according to any of the preceding claims, further comprising the step of solidifying the sample subsequent to the deformation.

14. A method according to any of the preceding claims, wherein, prior to the deformation, a shape-preserving body is introduced in at least one of the passages to be closed, the shape-preserving body being an elongated body having a cross-section substantially identical to the cross-section of the passage to be closed so that the shape-preserving body will substantially fill the cross-section and support the passage walls during deformation.

15. A method according to claim 14, wherein the shape-preserving body is introduced from the end of the filter body which is opposite to the end at which passage walls are to be deformed.

16. A method for producing a filter body for filtering flue gas, the method comprising
- producing, from a solidifiable particle-based plastic or plastifiable material, a filter body sample comprising a plurality of coextending throughgoing passages separated by common passage walls,
- closing one end of substantially each passage by mechanically deforming passage walls adjacent to the passage end in accordance with any of the preceding claims, and
- subsequently solidifying the plastic or plastifiable particle-based material to a porous solid material.

17. A method according to claim 16, wherein the plurality of passages are divided into first and second groups, the passages of the first group being closed at a first end of the filter body sample and the passages of the second group being closed at an opposite second end thereof.

18. A method according to claim 17, wherein the throughgoing passages of the first and second groups are closed in a checkerboard pattern so that substantially each passage of the first group has common walls solely with passages of the second group and vice versa.

19. A method according to claim 17, wherein the passages of the first or the second group are closed by deforming adjacent passage walls thereof by introducing the walls into a female forming tool forcing the outermost parts of the walls together.

20. A method according to claim 19, wherein the female forming tool is defined by adjacently positioned male forming tools positioned on the base of a mould.

21. A method according to claim 20, wherein the male forming tools are positioned so that each male forming tool is pressed into an individual passage coextending with the passage being closed.

22. A method according to claim 21, wherein the individual passages into which the male forming tools are pressed are passages adjacent to the passage being closed.

23. A method according to claim 22, wherein the passage being closed and the individual passages into which the male forming tools are introduced have in common the walls which are deformed.

24. A method according to any of claims 16-23, wherein the cross-sectional arrangement of the passages is in a number of substantially parallel rows, the passages in each row being arranged substantially equidistantly.

25. A method according to claim 24, wherein the cross-sectional arrangement of the passages is in a regular pattern, the individual passages having substantially identical polygonal cross-sections.

26. A method according to any claims 20-25, wherein the male forming tools are positioned on a substantially plane base whereby the deformation of the passage walls is performed substantially simultaneously by all female forming tools on the mould.

27. A method according to any of claims 20-25, wherein the base on which the male forming tools are positioned is shaped substantially as part of a drum which, when rolled over the filter body sample, sequentially introduces the male forming tools in the passages, whereby the walls are deformed sequentially.

28. A method according to any of claims 25-27, wherein the cross-sectional shape of the through-going passages are polygons and where the male forming tools have a cross-section being a polygon of the same order as the polygons of the cross-sectional shape of the through-going passages.

29. A method according to claim 28, wherein the polygon is of order 4.

30. A method according to claim 29, wherein at least the tips of the male forming tools are of the shape of a pyramid.

31. A method according to any of claims 16-30, wherein the particle-based material is a particle-based ceramic material, and the mean pore size of the solidified particle-based ceramic material is in the range of 10 to 100 µm.

32. A method according to claim 31, in which the mean pore size of the solidified particle-based ceramic material is in the range of 15-80 µm.

33. A method according to claim 32, in which the mean pore size of the solidified particle-based ceramic material is in the range of 20-70 µm, in particular 30-50 µm.

34. A method according to any of claims 31-33, wherein the porosity of the particle-based ceramic material is in the range of 30-90%.

35. A method according to claim 34, wherein the porosity of the particle-based ceramic material is in the range of 40-75%.

36. A method according to any of claims 31-35, wherein the particle-based ceramic material is made from particulate SiC having a weight average mean particle size in the range of 10-250 µm, such as in the range of 20-150 µm, preferably in the range of 30-100 µm.

37. A method according to any of claims 16-36, wherein the solidification of the body is performed by heat-sintering of the body.

38. A method according to any of the preceding claims, wherein the filter body sample is made by extruding the solidifiable plastic particle-based material.

39. A filter body of a porous solid particle-based ceramic material, comprising a plurality of coextending throughgoing passages separated by common passage walls, characterized in that substantially each of the passages being closed at one end thereof by a closure formed due to the walls of the passage converging, the wall thickness of the major part of the area of the closure substantially not exceeding the wall thickness of the filtering walls.

40. A filter body according to claim 39, wherein the solid particle-based ceramic material is SiC.

## Patentansprüche

1. Verfahren zum Verschließen eines Durchlasses in einer Filterkörperprobe, die aus einem aushärtbaren plastischen oder plastifizierbaren Material auf Partikelbasis besteht und eine Vielzahl sich gleich erstreckender, durchgehender Durchlasse umfaßt, die durch gemeinsame Durchlaßwände getrennt sind, **dadurch gekennzeichnet,** daß das Verfahren das mechanische Verformen von Durchlaßwänden an das Durchlaßende angrenzend umfaßt.

2. Verfahren nach Anspruch 1, wobei das Verformen der Wände durch Einführen der Wände in ein Matrizen-Formwerkzeug ausgeführt wird, das die äußersten Teile der Wände zusammendrückt.

3. Verfahren nach Anspruch 2, wobei das Matrizen-Formwerkzeug durch aneinandergrenzend angeordnete Patrizen-Formwerkzeuge gebildet wird, die an einem Unterteil einer Form angeordnet sind.

4. Verfahren nach Anspruch 3, wobei die Patrizen-Formwerkzeuge so angeordnet sind, daß jedes Patrizen-Formwerkzeug in einen einzelnen Durchlaß gepreßt wird, der sich so weit erstreckt wie der Durchlaß, der verschlossen wird.

5. Verfahren nach Anspruch 4, wobei die einzelnen Durchlasse, in die die Patrizen-Formwerkzeuge gepreßt werden, Durchlasse sind, die an den Durchlaß angrenzen, der verschlossen wird.

6. Verfahren nach Anspruch 5, wobei der Durchlaß verschlossen wird und die einzelnen Durchlasse, in die die Patrizen-Formwerkzeuge eingeführt werden, die Wände gemeinsam haben, die verformt werden.

7. Verfahren nach einem der vorangehenden Ansprüche, wobei mehrere der Durchlasse in der Filterkörperprobe verschlossen werden.

8. Verfahren nach einem der vorangehenden Ansprüche, wobei die Durchlasse im Querschnitt in einer Anzahl im wesentlichen paralleler Reihen angeordnet sind, wobei die Durchlasse in jeder Reihe im wesentlichen in gleichem Abstand angeordnet sind.

9. Verfahren nach Anspruch 8, wobei die Durchlasse im Querschnitt in einer regelmäßigen Struktur angeordnet sind, wobei die einzelnen Durchlasse im wesentlichen identische, vieleckige Querschnitte haben.

10. Verfahren nach einem der vorangehenden Ansprüche, wobei die Patrizen-Formwerkzeuge auf einem im wesentlichen planen Unterteil angeordnet sind, so daß das Verformen der Durchlaßwände im wesentlichen gleichzeitig durch alle Matrizen-Formwerkzeuge an der Form ausgeführt wird.

11. Verfahren nach einem der Ansprüche 1 bis 9, wobei das Unterteil, an dem die Patrizen-Formwerkzeuge angeordnet sind, im wesentlichen als Teil eines Zylinders geformt ist, der, wenn er über die Filterkörperprobe gerollt wird, die Patrizen-Formwerkzeuge nacheinander in die Durchlasse einführt, so daß die Wände nacheinander verformt werden.

12. Verfahren nach einem der vorangehenden Ansprüche, wobei die Vielzahl von Durchlassen in eine erste und eine zweite Gruppe unterteilt ist, wobei die Durchlasse der ersten Gruppe an einem ersten Ende der Filterkörperprobe verschlossen werden und die Durchlasse der zweiten Gruppe an einem gegenüberliegenden zweiten Ende verschlossen werden.

13. Verfahren nach einem der vorangehenden Ansprüche, das des weiteren den Schritt des Verfestigens der Probe nach dem Verformen umfaßt.

14. Verfahren nach einem der vorangehenden Ansprüche, wobei vor dem Verformen ein formbewahrender Körper in wenigstens einen der zu verschließenden Durchlasse eingeführt wird, wobei es sich bei dem formbewahrenden Körper um einen länglichen Körper mit einem Querschnitt handelt, der im wesentlichen mit dem Querschnitt des zu verschließenden Durchlasses identisch ist, so daß der formbewahrende Körper im wesentlichen den Querschnitt ausfüllt und die Durchlaßwände beim Verformen stützt.

15. Verfahren nach Anspruch 14, wobei der formbewahrende Körper vom Ende des Filterkörpers her eingeführt wird, das dem Ende gegenüberliegt, an dem Durchlaßwände zu verformen sind.

16. Verfahren zum Herstellen eines Filterkörpers zum Filtern von Rauchgas, wobei das Verfahren umfaßt:
- Herstellen einer Filterkörperprobe, die eine Vielzahl sich im wesentlichen gleich erstreckender, durchgehender Durchlasse, die durch gemeinsame Durchlaßwände getrennt sind, umfaßt, aus einem aushärtbaren plastischen oder plastifizierbaren Material auf Partikelbasis,
- Verschließen eines Endes im wesentlichen jedes Durchlasses durch mechanisches Verformen von an das Durchlaßende angrenzenden Wänden gemäß einem der vorangehenden Ansprüche, und
- anschließendes Verfestigen des plastischen oder plastifizierbaren Materials auf Partikelbasis zu einem porösen, festen Material.

17. Verfahren nach Anspruch 16, wobei die Vielzahl von Durchlassen in eine erste und eine zweite Gruppe unterteilt ist, wobei die Durchlasse der ersten Gruppe an einem ersten Ende der Filterkörperprobe verschlossen werden und die Durchlasse der zweiten Gruppe an einem gegenüberliegenden Ende verschlossen werden.

18. Verfahren nach Anspruch 17, wobei die durchgehenden Durchlasse der ersten und der zweiten Gruppe in einer Schachbrettstruktur verschlossen werden, so daß im wesentlichen jeder Durchlaß der ersten Gruppe gemeinsame Wände nur mit den Durchlassen der zweiten Gruppe hat und umgekehrt.

19. Verfahren nach Anspruch 17, wobei die Durchlasse der ersten oder der zweiten Gruppe verschlossen werden, indem aneinandergrenzende Durchlaßwände derselben verformt werden, indem die Wände in ein Matrizen-Formwerkzeug eingeführt werden, das die äußersten Teile der Wände zusammendrückt.

20. Verfahren nach Anspruch 19, wobei das Matrizen-Formwerkzeug durch aneinandergrenzend angeordnete Patrizen-Formwerkzeuge gebildet wird, die am Unterteil einer Form angeordnet sind.

21. Verfahren nach Anspruch 20, wobei die Patrizen-Formwerkzeuge so angeordnet sind, daß jedes Patrizen-Formwerkzeug in einen einzelnen Durchlaß gepreßt wird, der sich so weit erstreckt wie der Durchlaß, der verschlossen wird

22. Verfahren nach Anspruch 21, wobei die einzelnen Durchlasse, in die die Patrizen-Formwerkzeuge gepreßt werden, Durchlasse sind, die an den Durchlaß angrenzen, der verschlossen wird.

23. Verfahren nach Anspruch 22, wobei der Durchlaß, der verschlossen wird, und die einzelnen Durchlasse, in die die Patrizen-Formwerkzeuge eingeführt werden, die Wände gemeinsam haben, die verformt werden.

24. Verfahren nach einem der Ansprüche 16 - 23, wobei die Durchlasse im Querschnitt in einer Anzahl im wesentlichen paralleler Reihen angeordnet sind, wobei die Durchlasse in jeder Reihe im wesentlichen in gleichem Abstand angeordnet sind.

25. Verfahren nach Anspruch 24, wobei die Durchlasse im Querschnitt in einer regelmäßigen Struktur angeordnet sind, wobei die einzelnen Durchlasse im wesentlichen identische, vieleckige Querschnitte haben.

26. Verfahren nach einem der Ansprüche 20 - 25, wobei die Patrizen-Formwerkzeuge auf einem im wesentlichen planen Unterteil angeordnet sind, so daß das Verformen der Durchlaßwände im wesentlichen gleichzeitig durch alle Matrizen-Formwerkzeuge an der Form ausgeführt wird.

27. Verfahren nach einem der Ansprüche 20 - 25, wobei das Unterteil, an dem die Patrizen-Formwerkzeuge angeordnet sind, im wesentlichen als Teil eines Zylinders geformt ist, der, wenn er über die Filterkörperprobe gerollt wird, die Patrizen-Formwerkzeuge nacheinander in die Durchlasse einführt, so daß die Wände nacheinander verformt werden.

28. Verfahren nach einem der Ansprüche 25 - 27, wobei die Querschnittsform der durchgehenden Durchlasse vieleckig ist und wobei die Patrizen-Formwerkzeuge einen Querschnitt haben, der ein Vieleck der gleichen Ordnung ist wie die Vielecke der Querschnittsform der durchgehenden Durchlasse.

29. Verfahren nach Anspruch 28, wobei das Vieleck 4. Ordnung ist.

30. Verfahren nach Anspruch 29, wobei wenigstens die Spitzen der Patrizen-Formwerkzeuge die Form einer Pyramide haben.

31. Verfahren nach einem der Ansprüche 16 - 30, wobei das Material auf Partikelbasis ein Keramikmaterial auf Partikelbasis ist und die durchschnittliche Porengröße des ausgehärteten Keramikmaterials auf Partikelbasis im Bereich von 10 bis 100 µm liegt.

32. Verfahren nach Anspruch 31, wobei die mittlere Porengröße des ausgehärteten Keramikmaterials auf Partikelbasis im Bereich von 15 - 80 µm liegt.

33. Verfahren nach Anspruch 32, wobei die mittlere Porengröße des ausgehärteten Keramikmaterials auf Partikelbasis im Bereich von 20 - 70 µm, insbesondere 30 - 50 µm, liegt.

34. Verfahren nach einem der Ansprüche 31 - 33, wobei die Porosität des Keramikmaterials auf Partikelbasis im Bereich von 30 - 90 % liegt.

35. Verfahren nach Anspruch 34, wobei die Porosität des Keramikmaterials auf Partikelbasis im Bereich von 40 - 75 % liegt.

36. Verfahren nach einem der Ansprüche 31 - 35, wobei das Keramikmaterial auf Partikelbasis aus partikulärem SiC mit einer Gewichtsmittel-Durchschnittspartikelgröße im Bereich von 10 - 250 µm, beispielsweise im Bereich von 20 - 150 µm, vorzugsweise im Bereich von 30 - 100 µm, liegt.

37. Verfahren nach einem der Ansprüche 16 - 36, wobei das Aushärten des Körpers durch Wärmesintern des Körpers ausgeführt wird.

38. Verfahren nach einem der vorangehenden Ansprüche, wobei die Filterkörperprobe durch Extrudieren des aushärtbaren plastischen Materials auf Partikelbasis hergestellt wird.

39. Filterkörper aus einem porösen, harten Keramikmaterial auf Partikelbasis, der eine Vielzahl sich gleich erstreckender, durchgehender Durchlasse umfaßt, die durch gemeinsame Durchlaßwände getrennt sind, **dadurch gekennzeichnet,** daß im wesentlichen jeder der Durchlasse an einem Ende durch einen Verschluß verschlossen ist, der dadurch entsteht, daß die Wände des Durchlasses zusammenlaufen, wobei die Wanddicke des Hauptteils des Verschlußbereiches im wesentlichen die Wanddicke der Filterwände nicht überschreitet.

40. Filterkörper nach Anspruch 39, wobei es sich bei dem harten Keramikmaterial auf Partikelbasis um SiC handelt.

## Revendications

1. Procédé de fermeture d'un passage dans un échantillon de corps de filtre constitué à partir d'une matière plastique ou pouvant être plastifiée à base de particules pouvant être solidifiées et comportant plusieurs passages traversants ayant la même étendue séparés par des parois de passage communes, caractérisé en ce que le procédé comprend l'étape consistant a déformer mécaniquement des parois de passage adjacentes à l'extrémité de passage.

2. Procédé selon la revendication 1, dans lequel, la déformation des parois est réalisée en introduisant les parois dans un outil de mise en forme femelle repoussant les parties les plus extérieures des parois l'une vers l'autre.

3. Procédé selon la revendication 2, dans lequel, l'outil de mise en forme femelle est défini par des outils de mise en forme mâles positionnés de manière adjacente positionnés sur une base d'un moule.

4. Procédé selon la revendication 3, dans lequel les outils de mise en forme mâles sont positionnés de telle sorte que chaque outil de mise en forme mâle est enfoncé à l'intérieur d'un passage individuel sur une même étendue que le passage en cours de fermeture.

5. Procédé selon la revendication 4, dans lequel les passages individuels à l'intérieur desquels les outils de mise en forme mâles sont enfoncés sont des passages adjacents au passage en cours de fermeture.

6. Procédé selon la revendication 5, dans lequel le passage à fermer et les passages individuels à l'intérieur desquels sont introduits les outils de mise en forme mâles ont en commun les parois qui sont déformées.

7. Procédé selon l'une quelconque des revendications précédentes, dans lequel plusieurs passages de l'échantillon de corps de filtre sont fermés.

8. Procédé selon l'une quelconque des revendications précédentes, dans lequel l'agencement de la section transversale des passages est en plusieurs rangées à peu près parallèles, les passages de chaque rangée étant agencés de manière à peu près équidistante.

9. Procédé selon la revendication 8, dans lequel l'agencement de la section transversale des passages a une configuration régulière, les passages individuels ayant des sections transversales polygonales à peu près identiques.

10. Procédé selon l'une quelconque des revendications précédentes, dans lequel les outils de mise en forme mâles sont positionnés sur une base à peu près plane de sorte que la déformation des parois de passage est réalisée de manière à peu près simultanée par tous les outils de mise en forme femelles situés sur un moule.

11. Procédé selon l'une quelconque des revendications 1 à 9, dans lequel la base sur laquelle les outils de mise en forme mâles sont positionnés a pratiquement la forme d'une partie d'un tambour qui, lorsqu'elle est enroulée sur l'échantillon de corps de filtre, introduit de manière séquentielle les outils de mise en forme mâles dans les passages, de sorte que les parois sont déformées de manière séquentielle.

12. Procédé selon l'une quelconque des revendications précédentes, dans lequel les plusieurs passages sont divisés en un premier et un second groupes, les passages du premier groupe étant fermés au niveau d'une première extrémité de l'échantillon de corps de filtre et les passages du second groupe étant fermés au niveau d'une seconde extrémité opposée à celle-ci.

13. Procédé selon l'une quelconque des revendications précédentes, comportant de plus l'étape consistant à solidifier l'échantillon après la déformation.

14. Procédé selon l'une quelconque des revendications précédentes, dans lequel, avant la déformation, un corps de préservation de forme est introduit dans au moins un des passages à fermer, le corps de préservation de forme étant un corps allongé ayant une section transversale à peu près identique à la section transversale du passage à fermer de sorte que le corps de préservation de forme remplit à peu près la section transversale et supporte les parois de passage pendant la déformation.

15. Procédé selon la revendication 14, dans lequel le corps de préservation de forme est introduit à partir de l'extrémité du corps de filtre qui est opposée à l'extrémité au niveau de laquelle les parois de passage doivent être déformées.

16. Procédé pour produire un corps de filtre pour filtrer des gaz brûlés, le procédé comportant les étapes consistant à :
• produire, à partir d'une matière plastique ou pouvant être plastifiée à base de particules pouvant être solidifiée, un échantillon de corps de filtre comportant plusieurs passages traversants s'étendant sur la même étendue séparés par des parois de passage communes,
• fermer une première extrémité d'à peu près chaque passage en déformant mécaniquement les parois de passage adjacentes à l'extrémité de passage conformément à l'une quelconque des revendications précédentes, et
• solidifier de manière ultérieure la matière plastique ou le matériau à base de particules, pouvant être plastifié, en un matériau solide poreux.

17. Procédé selon la revendication 16, dans lequel les plusieurs passages sont divisés en un premier et un second groupes, les passages du premier groupe étant fermés au niveau d'une première extrémité de l'échantillon de corps de filtre et les passages du second groupe étant fermés au niveau d'une seconde extrémité opposée de celui-ci.

18. Procédé selon la revendication 17, dans lequel les passages traversants des premier et second groupes sont fermés selon une configuration d'échiquier de sorte qu'à peu près chaque passage du premier groupe a des parois communes avec des passages du second groupe seulement et vice versa.

19. Procédé selon la revendication 17, dans lequel les passages des premier et second groupes sont fermés en déformant des parois de passage adjacentes de ceux-ci en introduisant les parois à l'intérieur d'un outil de mise en forme femelle repoussant les parties les plus extérieures des parois l'une vers l'autre.

20. Procédé selon la revendication 19, dans lequel l'outil de mise en forme femelle est défini par des outils de mise en forme mâles positionnés de manière adjacente, positionnés sur la base d'un moule.

21. Procédé selon la revendication 20, dans lequel les outils de mise en forme mâles sont positionnés de sorte que chaque outil de mise en forme mâle est enfoncé à l'intérieur d'un passage individuel sur une même étendue que le passage en cours de fermeture.

22. Procédé selon la revendication 21, dans lequel les passages individuels à l'intérieur desquels les outils de mise en forme mâles sont enfoncés sont des passages adjacents au passage en cours de fermeture.

23. Procédé selon la revendication 22, dans lequel le passage en cours de fermeture et les passages individuels a' l'intérieur desquels sont introduits les outils de mise en forme mâles ont en commun les parois qui sont déformées.

24. Procédé selon l'une quelconque des revendications 16 à 23, dans lequel l'agencement de la section transversale des passages est en plusieurs rangées à peu près parallèles, les passages de chaque rangée étant agencés de manière à peu près équidistante.

25. Procédé selon la revendication 24, dans lequel l'agencement de la section transversale des passages a une configuration régulière, les passages individuels ayant des sections transversales polygonales à peu près identiques.

26. Procédé selon l'une quelconque des revendications 20 à 25, dans lequel les outils de mise en forme mâles sont positionnés sur une base à peu près plane de sorte que la déformation des parois de passage est réalisée de manière à peu près simultanée par tous les outils de mise en forme femelles sur le moule.

27. Procédé selon l'une quelconque des revendications 20 à 25, dans lequel la base sur laquelle les outils de mise en forme mâles sont positionnés, a pratiquement la forme d'une partie d'un tambour qui, lorsqu'il est enroulé sur l'échantillon de corps de filtre, introduit de manière séquentielle les outils de mise en forme mâles dans les passages, de sorte que les parois sont déformées de manière séquentielle.

28. Procédé selon l'une quelconque des revendications 25 à 27, dans lequel la forme de la section transversale des passages traversants sont des polygones et où les outils de mise en forme mâles ont une section transversale qui est un polygone du même ordre que les polygones de la forme de la section transversale des passages traversants.

29. Procédé selon la revendication 28, dans lequel le polygone est d'ordre 4.

30. Procédé selon la revendication 29, dans lequel au moins les bouts des outils de mise en forme mâles ont la forme d'une pyramide.

31. Procédé selon l'une quelconque des revendications 16 à 30, dans lequel le matériau à base de particules est un matériau en céramique à base de particules, et la dimension de pore moyenne du matériau en céramique à base de particules, solidifié, est dans la plage allant de 10 à 100 µm.

32. Procédé selon la revendication 31, dans lequel la dimension de pore moyenne du matériau en céramique à base de particules, solidifié, est dans la plage allant de 15 à 80 µm.

33. Procédé selon la revendication 32, dans lequel la dimension de pore moyenne du matériau en céramique à base de particules, solidifié, est dans la plage allant de 20 à 70 µm, en particulier de 30 à 50 µm.

34. Procédé selon l'une quelconque des revendications 31 à 33, dans lequel la porosité du matériau en céramique à base de particules est dans la plage allant de 30 à 90 %.

35. Procédé selon la revendication 34, dans lequel la porosité du matériau en céramique à base de particules est dans la plage allant de 40 à 75 %.

36. Procédé selon l'une quelconque des revendications 31 à 35, dans lequel le matériau en céramique à base de particules est constitué de SiC particulaire ayant une dimension de particule moyenne, en moyenne pondérée, dans la plage allant de 10 à 250 µm, tel que dans la plage de 20 à 150 µm, de préférence dans la plage allant de 30 à 100 µm.

37. Procédé selon l'une quelconque des revendications 16 à 36, dans lequel la solidification du corps est réalisée par frittage thermique du corps.

38. Procédé selon l'une quelconque des revendications précédentes, dans lequel l'échantillon de corps de filtre est constitué en extrudant le matériau à base de particules de matière plastique pouvant être solidifiée.

39. Corps de filtre constitué d'un matériau en céramique à base de particules solides, poreux, comportant plusieurs passages traversants s'étendant sur la même étendue séparés par des parois de passage communes, caractérisé en ce qu'à peu près chacun des passages est fermé au niveau d'une première extrémité de celui-ci par une fermeture formée du fait que les parois du passage convergent, l'épaisseur de paroi de la partie principale de la zone de la fermeture ne dépassant pratiquement pas l'épaisseur de paroi des parois de filtration.

40. Corps de filtre selon la revendication 39, dans lequel le matériau en céramique à base de particules solides est du SiC.
